# EUROPÄISCHE PATENTSCHRIFT

(11) **EP 2 412 992 B1**
(45) Veröffentlichungstag und Bekanntmachung des Hinweises auf die Patenterteilung: **01.06.2016**
(21) Anmeldenummer: 11173578.3
(22) Anmeldetag: 12.07.2011
(51) Int. Cl.: F16B 43/00

(54) **Befestigungsvorrichtung**
Attachment device
Dispositif de fixation

(30) Priorität: 30.07.2010 DE 102010038728
(43) Veröffentlichungstag der Anmeldung: 01.02.2012
(73) Patentinhaber: HILTI Aktiengesellschaft, 9494 Schaan (LI)
(72) Erfinder: Baudy, Daniel, 6800 Feldkirch (AT); Thau, Sebastian, 9493 Mauren (LI)
(74) Vertreter: Hilti Aktiengesellschaft Corporate Intellectual Property

(56) Entgegenhaltungen:
- EP-A2- 2 157 324
- DE-U- 1 402 035
- DE-U1- 9 201 686
- DE-U1- 29 720 094
- US-A- 2 761 347

## Beschreibung

### Technisches Gebiet

Die Erfindung betrifft eine Vorrichtung zur Befestigung eines ersten Gegenstandes an einem zweiten Gegenstand.

### Stand der Technik

Derartige Befestigungsvorrichtungen sind aus der DE 297 20 094 U1, der EP 2 157 324 A2 oder der US 2 761 347 bekannt und weisen häufig einen Kopf, einen länglichen Schaft, und ein Abdichtmittel auf. Der Schaft dient dazu, in den ersten und/oder zweiten Gegenstand einzudringen, wobei das Abdichtmittel ein Eindringen von äusseren Medien, beispielsweise Feuchtigkeit, entlang dem Schaft verhindern soll. Üblicherweise weist das Abdichtelement eine erste Dichtfläche für eine Abdichtung gegen den ersten Gegenstand sowie eine zweite Dichtfläche für eine Abdichtung gegen den Schaft auf. Insbesondere bei schräg in den ersten und/oder zweiten Gegenstand eingedrungenem Schaft besteht jedoch die Gefahr von Undichtigkeiten.

### Darstellung der Erfindung

Aufgabe der Erfindung ist es, eine Befestigungsvorrichtung zur Verfügung zu stellen, bei der die Gefahr von derartigen Undichtigkeiten reduziert wird.

Die Aufgabe wird gelöst durch eine Vorrichtung zur Befestigung eines ersten Gegenstandes an einem zweiten Gegenstand, mit einem Kopf, wobei der Kopf ein Widerlager für eine Abstützung des ersten Gegenstandes aufweist, einem länglichen Schaft, wobei der Schaft in seiner Längsrichtung eine Achse definiert, und einem Abdichtmittel, wobei das Abdichtmittel eine erste Dichtfläche für eine Abdichtung gegen den ersten Gegenstand und eine zweite Dichtfläche für eine Abdichtung gegen das Widerlager aufweist, wobei das Abdichtmittel ein Dichtelement und ein in axialer Richtung zwischen dem Dichtelement und dem Kopf angeordnetes Abdeckelement aufweist, wobei das Dichtelement ein erstes Material umfasst und das Abdeckelement ein sich von dem ersten Material unterscheidendes zweites Material umfasst.

Eine bevorzugte Ausführungsform ist dadurch gekennzeichnet, dass die erste und die zweite Dichtfläche quer, insbesondere senkrecht zu der Achse orientiert sind. Wenn die Stützkraft zwischen dem Widerlager und dem ersten Gegenstand oder zumindest eine Richtungskomponente der Stützkraft in Richtung der Achse wirkt, werden die Dichtflächen mit der Stützkraft beziehungsweise ihrer Richtungskomponente in Richtung der Achse beaufschlagt.

Eine bevorzugte Ausführungsform ist dadurch gekennzeichnet, dass die zweite Dichtfläche unmittelbar gegenüber dem Widerlager angeordnet ist. Besonders bevorzugt berührt die zweite Dichtfläche das Widerlager.

Eine bevorzugte Ausführungsform ist dadurch gekennzeichnet, dass die erste und/oder die zweite Dichtfläche ein Elastomer umfasst. Besonders bevorzugt besteht die erste und/oder die zweite Dichtfläche aus einem Elastomer.

Eine bevorzugte Ausführungsform ist dadurch gekennzeichnet, dass das Abdichtmittel, das Dichtelement und/oder das Abdeckelement den Schaft ringförmig umschliesst. Besonders bevorzugt besitzt das Abdichtmittel, das Dichtelement und/oder das Abdeckelement eine im Wesentlichen kreisförmige Innen- und/oder Aussenkontur.

Eine bevorzugte Ausführungsform ist dadurch gekennzeichnet, dass das Abdeckelement einen grösseren Innendurchmesser und/oder Aussendurchmesser als das Dichtelement aufweist.

Eine bevorzugte Ausführungsform ist dadurch gekennzeichnet, dass das Dichtelement die erste und die zweite Dichtfläche aufweist.

Eine bevorzugte Ausführungsform ist dadurch gekennzeichnet, dass das Widerlager eine Anlagefläche für das Abdeckelement und einen besonders bevorzugt um die Achse umlaufenden Vorsprung aufweist, wobei der Vorsprung in axialer Richtung an das Dichtelement heranreicht.

Eine bevorzugte Ausführungsform ist dadurch gekennzeichnet, dass das Dichtelement eine Anlagefläche für das Abdeckelement und einen besonders bevorzugt um die Achse umlaufenden Vorsprung aufweist, wobei der Vorsprung in axialer Richtung an das Widerlager heranreicht.

Eine bevorzugte Ausführungsform ist dadurch gekennzeichnet, dass das Abdeckelement ein Metall und/oder eine Legierung umfasst. Besonders bevorzugt besteht das Abdeckelement aus einem Metall und/oder einer Legierung.

Eine bevorzugte Ausführungsform ist dadurch gekennzeichnet, dass der Kopf einen gleich grossen oder grösseren Aussendurchmesser als das Abdeckelement und/oder das Dichtelement aufweist.

Eine bevorzugte Ausführungsform ist dadurch gekennzeichnet, dass das Dichtelement die erste Dichtfläche aufweist und das Abdeckelement die zweite Dichtfläche aufweist. Besonders bevorzugt weist das Dichtelement eine dritte Dichtfläche für eine Abdichtung gegen das Abdeckelement und/oder das Abdeckelement eine vierte Dichtfläche für eine Abdichtung gegen das Dichtelement auf.

Eine bevorzugte Ausführungsform ist dadurch gekennzeichnet, dass das Abdeckelement ein Elastomer umfasst. Besonders bevorzugt besteht das Abdeckelement aus einem Elastomer. Besonders bevorzugt weist das Elastomer eine geringere Elastizität als ein Material des Dichtelementes auf.

Eine bevorzugte Ausführungsform ist dadurch gekennzeichnet, dass das Abdeckelement ein Gleitmittel umfasst. Besonders bevorzugt besteht das Abdeckelement aus einem Gleitmittel. Das Gleitmittel erhöht die Gleitfähigkeit des Abdichtmittels gegenüber einer benachbarten Fläche beispielsweise des Kopfes oder des Widerlagers und umfasst dabei vorzugsweise ein organisches oder ein anorganisches Gleitmittel, insbesondere ein Wachs und/oder ein Öl.

Eine bevorzugte Ausführungsform ist dadurch gekennzeichnet, dass der Schaft Kraftübertragungsmittel für ein Halten des zweiten Gegenstandes aufweist.

Eine bevorzugte Ausführungsform ist dadurch gekennzeichnet, dass der Schaft ein erstes und ein zweites Ende aufweist, und dass der Kopf an dem ersten Ende angeordnet ist und/oder das zweite Ende eine Spitze aufweist.

### Ausführungsbeispiele

Die Erfindung wird nachstehend anhand von Ausführungsbeispielen unter Bezugnahme auf die Zeichnungen näher erläutert. Es zeigen:
- Fig. 1: eine kombinierte Seiten- und Schnittansicht einer Befestigungsvorrichtung in mehreren Varianten,
- Fig. 2: eine kombinierte Seiten- und Schnittansicht einer Befestigungsvorrichtung in mehreren Varianten in befestigtem Zustand,
- Fig. 3: eine kombinierte Seiten- und Schnittansicht einer Befestigungsvorrichtung in mehreren Varianten,
- Fig. 4: eine kombinierte Seiten- und Schnittansicht der Befestigungsvorrichtungsvarianten aus Fig. 3 in befestigtem Zustand und
- Fig. 5: eine kombinierte Seiten- und Schnittansicht einer Befestigungsvorrichtung in mehreren Varianten in befestigtem Zustand.

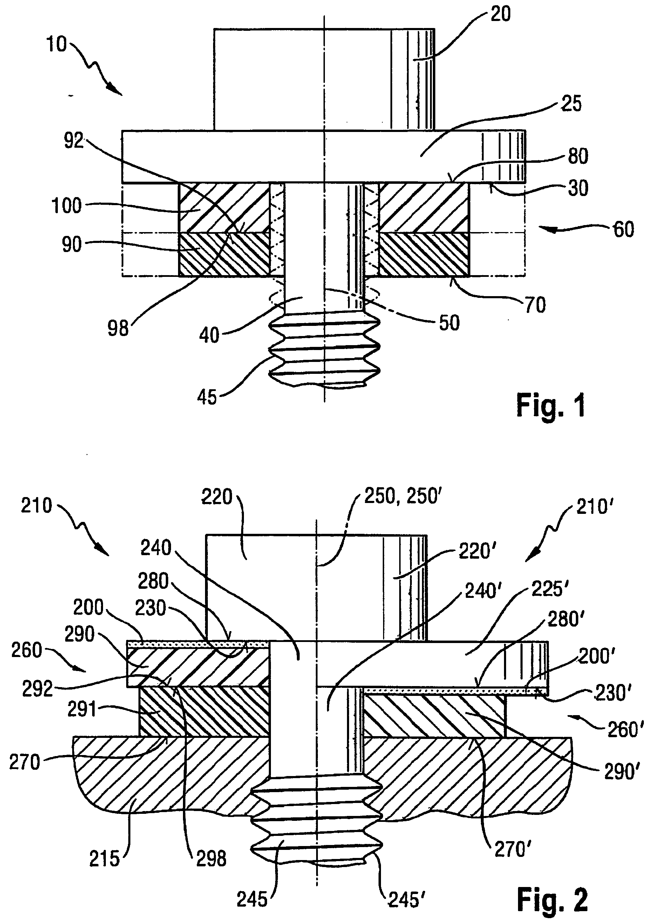

In Fig. 1 ist eine Vorrichtung 10 zur Befestigung eines nicht gezeigten ersten Gegenstandes an einem ebenfalls nicht gezeigten zweiten Gegenstand in einer kombinierten Seiten- und Schnittansicht dargestellt. Die Vorrichtung 10 weist einen Kopf 20 mit einem als Anlagefläche ausgebildeten Widerlager 30 für eine Abstützung des ersten Gegenstandes sowie einen länglichen Schaft 40 auf. Der Kopf 20 ist an einem ersten Ende des Schaftes 40 angeordnet, wobei der Schaft 40 an seinem zweiten Ende eine nicht dargestellte Spitze aufweist. Der Schaft definiert in seiner Längsrichtung eine Achse 50, zu der das Widerlager 30 vorzugsweise senkrecht orientiert ist. Weiterhin weist der Schaft 40 ein als ein Gewinde ausgebildetes Kraftübertragungsmittel 45 zum Übertragen einer Haltekraft von der Vorrichtung 10 auf den nicht gezeigten zweiten Gegenstand auf. Bevorzugt ist die Vorrichtung 10 als selbstpenetrierendes Drehbefestigungselement ausgebildet. Der Kopf 20 und/oder der Schaft 40 umfasst ein Metall, insbesondere Aluminium, oder eine Legierung, insbesondere Edelstahl oder Stahl, bevorzugt mit einer Antikorrosionsbeschichtung, welche insbesondere Zink enthält.

Die Vorrichtung 10 weist ein Abdichtmittel 60 mit einer ersten Dichtfläche 70 für eine Abdichtung gegen den ersten Gegenstand und einer zweiten Dichtfläche 80 für eine Abdichtung gegen das Widerlager 30 auf. Insbesondere für die Abdichtung gegen das Widerlager 30 ist die zweite Dichtfläche 80 unmittelbar gegenüber dem Widerlager 30 angeordnet und berührt das Widerlager 30. Das Abdichtmittel 60 umfasst dabei ein Dichtelement 90 und ein in axialer Richtung zwischen dem Dichtelement 90 und dem Kopf 20 angeordnetes Abdeckelement 100. Das Dichtelement 90 und das Abdeckelement 100 besitzen eine bevorzugt kreisförmige Innen- und Aussenkontur und umschliessen den Schaft 40 ringförmig.

Das Dichtelement 90 weist eine dritte Dichtfläche 92 für eine Abdichtung gegen das Abdeckelement 100 und das Abdeckelement 100 weist eine vierte Dichtfläche 98 für eine Abdichtung gegen das Dichtelement 90 auf. Die dritte Dichtfläche 92 und die vierte Dichtfläche 98 sind einander gegenüber angeordnet und berühren sich. Bevorzugt sind die dritte Dichtfläche 92 und die vierte Dichtfläche 98 miteinander stoffschlüssig verbunden, insbesondere verklebt oder verschweisst. Bei nicht dargestellten Ausführungsbeispielen liegen die dritte Dichtfläche und die vierte Dichtfläche nur lose aneinander an.

Das Dichtelement 90, welches insbesondere die erste Dichtfläche 70 umfasst, besteht aus einem ersten Material. Das Abdeckelement 100, welches insbesondere die zweite Dichtfläche 80 umfasst, besteht aus einem zweiten Material, welches sich von dem ersten Material unterscheidet. Vorzugsweise besitzt das zweite Material eine grössere Shore-Härte und damit eine geringere Elastizität als das erste Material. Unter Umständen ist das Dichtelement 90 geeignet, Dickenunterschiede des ersten und/oder des zweiten Gegenstandes auszugleichen, so dass sich die Vorrichtung 10 gegebenenfalls für unterschiedliche Anwendungen eignet. Unter Umständen besitzt das Abdeckelement 100 eine verbesserte Robustheit gegenüber Scherkräften zwischen dem Abdeckelement 100 und dem Kopf 20 bei einem Festdrehen der Vorrichtung 10.

Das erste Material umfasst bevorzugt ein erstes Elastomer, besonders bevorzugt einen ersten Ethylen-Propylen-Dien-Kautschuk (EPDM), und/oder das zweite Material umfasst bevorzugt ein zweites Elastomer, besonders bevorzugt einen zweiten EPDM.

Der Kopf 20 weist einen umlaufenden Vorsprung 25 auf, welcher einen grösseren Aussendurchmesser besitzt als jeweils das Dichtelement 90 und das Abdeckelement 100. Das Dichtelement 90 besitzt einen gleich grossen Aussendurchmesser wie das Abdeckelement 100. Wie in Fig. 1 gebrochen dargestellt, besitzen bei abgewandelten Ausführungsbeispielen das Dichtelement 90 und/oder das Abdeckelement 100 einen gleich grossen Aussendurchmesser wie der Kopf 20 beziehungsweise dessen Vorsprung 25. Der Aussendurchmesser des Dichtelementes 90 ist dabei oder bei weiteren nicht dargestellten Ausführungsbeispielen insbesondere kleiner oder grösser als der Aussendurchmesser des Abdeckelementes 100. Weiterhin besitzt das Dichtelement 90 einen gleich grossen Innendurchmesser wie das Abdeckelement 100. Bei nicht dargestellten Ausführungsbeispielen ist der Innendurchmesser des Dichtelementes kleiner oder grösser als der Innendurchmesser des Abdeckelementes.

Das Kraftübertragungsmittel 45 ist von dem Abdichtmittel 60 und insbesondere der ersten Dichtfläche 70 in axialer Richtung beabstandet, und zwar in der von dem Kopf 20 weg weisenden Richtung. Insbesondere bei plattenförmigem ersten und/oder zweiten Gegenstand ist es dann unter Umständen möglich, den ersten und/oder zweiten Gegenstand zwischen dem Kraftübertragungsmittel 45 und dem Abdichtmittel 60 einzuklemmen, so dass eine ausreichende Dichtkraft auf die erste Dichtfläche 70 gewährleistet ist. Weiterhin wird unter Umständen ein Überdrehen der Vorrichtung 10 vermieden. Wie in Fig. 1 gebrochen dargestellt, reicht das Kraftübertragungsmittel 45 bei abgewandelten Ausführungsbeispielen in axialer Richtung bis an das Abdichtmittel 60 beziehungsweise die erste Dichtfläche 70 oder bis an den Kopf 20 heran.

In Fig. 2 sind in der linken Bildhälfte eine Vorrichtung 210 sowie in der rechten Bildhälfte eine abgewandelte Vorrichtung 210' jeweils zur Befestigung eines ersten Gegenstandes 215 an einem nicht gezeigten zweiten Gegenstand in einer kombinierten Seiten- und Schnittansicht dargestellt.

Die in der linken Bildhälfte von Fig. 2 dargestellte Vorrichtung 210 weist einen Kopf 220 mit einem als Anlagefläche ausgebildeten Widerlager 230 für eine Abstützung des ersten Gegenstandes sowie einen länglichen Schaft 240 auf. Der Kopf 220 ist an einem ersten Ende des Schaftes 240 angeordnet, wobei der Schaft 240 an seinem zweiten Ende eine nicht dargestellte Spitze aufweist. Der Schaft 240 definiert in seiner Längsrichtung eine Achse 250, zu der das Widerlager 230 vorzugsweise senkrecht orientiert ist Weiterhin weist der Schaft 240 ein als ein Gewinde ausgebildetes Kraftübertragungsmittel 245 zum Übertragen einer Haltekraft von der Vorrichtung 210 auf den nicht gezeigten zweiten Gegenstand auf. Bevorzugt ist die Vorrichtung 210 als selbstpenetrierendes Drehbefestigungselement ausgebildet. Der Kopf 220 und/oder der Schaft 240 umfasst ein Metall, insbesondere Aluminium, oder eine Legierung, insbesondere Edelstahl oder Stahl, bevorzugt mit einer Antikorrosionsbeschichtung, welche insbesondere Zink enthält.

Die Vorrichtung 210 weist ein Abdichtmittel 260 mit einer ersten Dichtfläche 270 für eine Abdichtung gegen den ersten Gegenstand 215 und einer zweiten Dichtfläche 280 für eine Abdichtung gegen das Widerlager 230 auf. Insbesondere für die Abdichtung gegen das Widerlager 230 ist die zweite Dichtfläche unmittelbar gegenüber dem Widerlager 230 angeordnet und berührt das Widerlager 230. Das Abdichtmittel 260 umfasst dabei ein Dichtelement 290 und ein in axialer Richtung zwischen dem Dichtelement 290 und dem Kopf 220 angeordnetes Abdeckelement 200. Das Dichtelement 290 besitzt eine bevorzugt kreisförmige Innen- und Aussenkontur und umschliesst den Schaft 240 ringförmig.

Das Abdichtmittel umfasst weiterhin ein weiteres Dichtelement 291, welches eine dritte Dichtfläche 292 für eine Abdichtung gegen das Dichtelement 290 aufweist. Das Dichtelement 290 weist eine vierte Dichtfläche 298 für eine Abdichtung gegen das weitere Dichtelement 291 auf. Die dritte Dichtfläche 292 und die vierte Dichtfläche 298 sind einander gegenüber angeordnet und berühren sich. Bevorzugt sind die dritte Dichtfläche 292 und die vierte Dichtfläche 298 miteinander stoffschlüssig verbunden, insbesondere verklebt oder verschweisst. Bei nicht dargestellten Ausführungsbeispielen liegen die dritte Dichtfläche und die vierte Dichtfläche nur lose aneinander an.

Das Dichtelement 290 besteht aus einem ersten Material. Das Abdeckelement 200, welches insbesondere die zweite Dichtfläche 280 umfasst, besteht aus einem zweiten Material, welches sich von dem ersten Material unterscheidet. Vorzugsweise umfasst oder besteht das zweite Material aus einem Gleitmittel, wie beispielsweise einem Wachs oder einem Öl. Unter Umständen verringert das Abdeckelement gegebenenfalls auftretende Scherkräfte zwischen dem Abdeckelement 200 und dem Kopf 220 bei einem Festdrehen der Vorrichtung 210.

Vorzugsweise wird das Abdeckelement 200 vor einem Aufziehen des Dichtelementes 290 auf den Schaft 240 auf das Dichtelement 290 aufgetragen, bevorzugt durch Sprühen oder Tauchen. Bei nicht gezeigten Ausführungsbeispielen erstreckt sich das Abdeckelement über die gesamte Oberfläche des Dichtelementes, insbesondere über die gegenüber dem Schaft angeordnete Innenfläche. Das Abdeckelement 200 und das Dichtelement 290 besitzen einen gleich grossen Aussendurchmesser, welcher grösser ist als ein Aussendurchmesser des Kopfes 220. Bei nicht gezeigten Ausführungsbeispielen ist der Aussendurchmesser des Kopfes gleich gross oder grösser als der Aussendurchmesser des Abdeckelementes und/oder des Dichtelementes.

Das weitere Dichtelement besteht aus einem dritten Material. Vorzugsweise besitzt das erste Material eine grössere Shore-Härte und damit eine geringere Elastizität als das dritte Material. Unter Umständen ist das weitere Dichtelement 291 geeignet, Dickenunterschiede des ersten und/oder des zweiten Gegenstandes auszugleichen, so dass sich die Vorrichtung 210 gegebenenfalls für unterschiedliche Anwendungen eignet. Unter Umständen besitzt das Dichtelement 290 eine verbesserte Robustheit gegenüber Scherkräften zwischen dem Dichtelement 290 und dem Kopf 220 bei einem Festdrehen der Vorrichtung 210.

Das erste Material umfasst bevorzugt ein erstes Elastomer, besonders bevorzugt einen ersten EPDM, und/oder das dritte Material umfasst bevorzugt ein zweites Elastomer, besonders bevorzugt einen zweiten EPDM. Gemäss einem weiteren Ausführungsbeispiel umfasst das erste Material ein Metall, insbesondere Aluminium, oder eine Legierung, insbesondere Edelstahl oder Stahl, bevorzugt mit einer Antikorrosionsbeschichtung, welche insbesondere Zink enthält.

Das Kraftübertragungsmittel 245 ist von dem Abdichtmittel 260 und insbesondere der ersten Dichtfläche 270 in axialer Richtung beabstandet, und zwar in der von dem Kopf 220 weg weisenden Richtung. Bei nicht dargestellten Ausführungsbeispielen reicht das Kraftübertragungsmittel in axialer Richtung bis an das Abdichtmittel beziehungsweise die erste Dichtfläche oder bis an den Kopf heran.

Die in der rechten Bildhälfte von Fig. 2 dargestellte Vorrichtung 210' weist einen Kopf 220' mit einem als Anlagefläche ausgebildeten Widerlager 230' für eine Abstützung des ersten Gegenstandes sowie einen länglichen Schaft 240' auf. Der Kopf 220' ist an einem ersten Ende des Schaftes 240' angeordnet, wobei der Schaft 240' an seinem zweiten Ende eine nicht dargestellte Spitze aufweist. Der Schaft definiert in seiner Längsrichtung eine Achse 250', zu der das Widerlager 230' vorzugsweise senkrecht orientiert ist. Weiterhin weist der Schaft 240' ein als ein Gewinde ausgebildetes Kraftübertragungsmittel 245' zum Übertragen einer Haltekraft von der Vorrichtung 210' auf den nicht gezeigten zweiten Gegenstand auf. Bevorzugt ist die Vorrichtung 210' als selbstpenetrierendes Drehbefestigungselement ausgebildet. Der Kopf 220' und/oder der Schaft 240' umfasst ein Metall, insbesondere Aluminium, oder eine Legierung, insbesondere Edelstahl oder Stahl, bevorzugt mit einer Antikorrosionsbeschichtung, welche insbesondere Zink enthält.

Die Vorrichtung 210' weist ein Abdichtmittel 260' mit einer ersten Dichtfläche 270' für eine Abdichtung gegen den ersten Gegenstand 215 und einer zweiten Dichtfläche 280' für eine Abdichtung gegen das Widerlager 230' auf. Insbesondere für die Abdichtung gegen das Widerlager 230' ist die zweite Dichtfläche unmittelbar gegenüber dem Widerlager 230' angeordnet und berührt das Widerlager 230'. Das Abdichtmittel 260' umfasst dabei ein Dichtelement 290' und ein in axialer Richtung zwischen dem Dichtelement 290' und dem Kopf 220' angeordnetes Abdeckelement 200'. Das Dichtelement 290' besitzt eine bevorzugt kreisförmige Innen- und Aussenkontur und umschliesst den Schaft 240' ringförmig.

Das Dichtelement 290' besteht aus einem ersten Material. Das erste Material umfasst bevorzugt ein Elastomer, besonders bevorzugt einen EPDM. Das Abdeckelement 200', welches insbesondere die zweite Dichtfläche 280' umfasst, besteht aus einem zweiten Material, welches sich von dem ersten Material unterscheidet. Vorzugsweise umfasst oder besteht das zweite Material aus einem Gleitmittel, wie beispielsweise einem Wachs oder einem Öl. Unter Umständen verringert das Abdeckelement gegebenenfalls auftretende Scherkräfte zwischen dem Abdeckelement 200' und dem Kopf 220' bei einem Festdrehen der Vorrichtung 210'.

Der Kopf 220' weist einen umlaufenden Vorsprung 225' auf, welcher einen grösseren Aussendurchmesser besitzt als das Dichtelement 290'. Bei nicht gezeigten Ausführungsbeispielen weist die Befestigungsvorrichtung zusätzlich oder anstelle des umlaufenden Vorsprungs 225' ein Ringelement auf, welches axiale Kräfte von dem Kopf auf das Abdichtmittel überträgt. Das Ringelement umfasst ein Metall, insbesondere Aluminium, oder eine Legierung, insbesondere Edelstahl oder Stahl, bevorzugt mit einer Antikorrosionsbeschichtung, welche insbesondere Zink enthält. Das Ringelement besteht dabei vorzugsweise aus dem gleichen Material wie der Kopf und/oder der Schaft.

Vorzugsweise wird das Abdeckelement 200' vor einem Aufziehen des Dichtelementes 290' auf den Schaft 240' auf das Widerlager 230' aufgetragen, bevorzugt durch Sprühen oder Tauchen. Bei nicht gezeigten Ausführungsbeispielen erstreckt sich das Abdeckelement über die gesamte Oberfläche des Kopfes und des Schaftes, insbesondere über die gegenüber dem Dichtelement angeordnete Aussenfläche des Schaftes und/oder über das Kraftübertragungsmittel 245', beziehungsweise über die gesamte Oberfläche des Ringelementes. Der Vorsprung 225' und das Abdeckelement 200' besitzen einen gleich grossen Aussendurchmesser, welcher grösser ist als ein Aussendurchmesser des Dichtelementes 290'. Bei nicht gezeigten Ausführungsbeispielen ist der Aussendurchmesser des Dichtelementes gleich gross oder grösser als der Aussendurchmesser des Abdeckelementes und/oder des Widerlagers.

Das Kraftübertragungsmittel 245' ist von dem Abdichtmittel 260' und insbesondere der ersten Dichtfläche 270' in axialer Richtung beabstandet, und zwar in der von dem Kopf 220' weg weisenden Richtung. Bei nicht dargestellten Ausführungsbeispielen reicht das Kraftübertragungsmittel in axialer Richtung bis an das Abdichtmittel beziehungsweise die erste Dichtfläche oder bis an den Kopf heran.

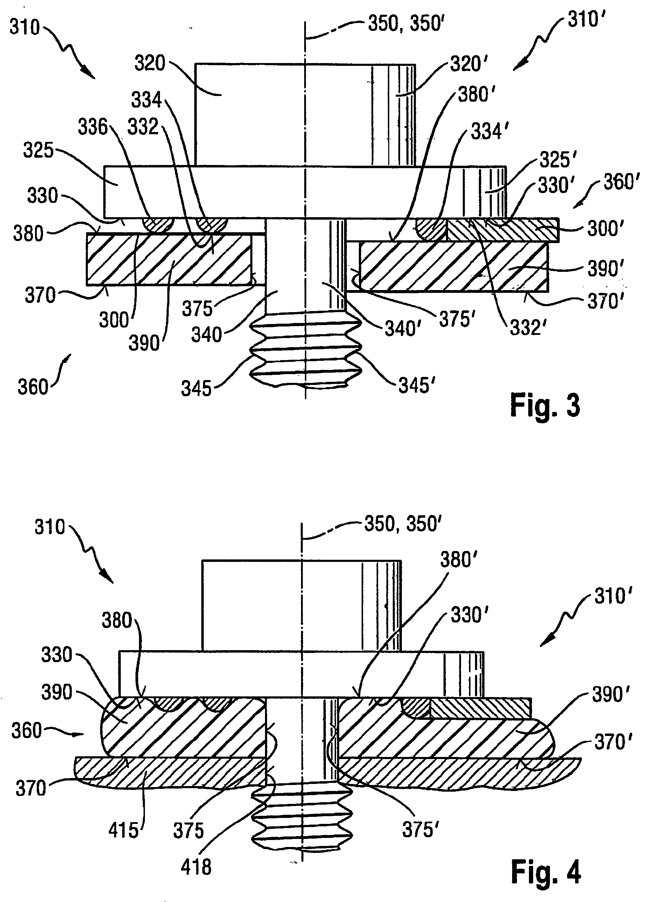

In Fig. 3 sind in der linken Bildhälfte eine Vorrichtung 310 sowie in der rechten Bildhälfte eine abgewandelte Vorrichtung 310' jeweils zur Befestigung eines nicht gezeigten ersten Gegenstandes an einem ebenfalls nicht gezeigten zweiten Gegenstand in einer kombinierten Seiten- und Schnittansicht dargestellt.

Die in der linken Bildhälfte von Fig. 3 dargestellte Vorrichtung 310 weist einen Kopf 320 mit einem als Anlagefläche ausgebildeten Widerlager 330 für eine Abstützung des ersten Gegenstandes sowie einen länglichen Schaft 340 auf. Der Kopf 320 ist an einem ersten Ende des Schaftes 340 angeordnet, wobei der Schaft 340 an seinem zweiten Ende eine nicht dargestellte Spitze aufweist. Der Schaft definiert in seiner Längsrichtung eine Achse 350, zu der das Widerlager 330 vorzugsweise senkrecht orientiert ist. Weiterhin weist der Schaft 340 ein als ein Gewinde ausgebildetes Kraftübertragungsmittel 345 zum Übertragen einer Haltekraft von der Vorrichtung 310 auf den nicht gezeigten zweiten Gegenstand auf. Bevorzugt ist die Vorrichtung 310 als selbstpenetrierendes Drehbefestigungselement ausgebildet. Der Kopf 320 und/oder der Schaft 340 umfasst ein Metall, insbesondere Aluminium, oder eine Legierung, insbesondere Edelstahl oder Stahl, bevorzugt mit einer Antikorrosionsbeschichtung, welche insbesondere Zink enthält.

Die Vorrichtung 310 weist ein Abdichtmittel 360 mit einer ersten Dichtfläche 370 für eine Abdichtung gegen den ersten Gegenstand und einer zweiten Dichtfläche 380 für eine Abdichtung gegen das Widerlager 330 auf. Das Abdichtmittel 360 umfasst dabei ein Dichtelement 390 und ein in axialer Richtung zwischen dem Dichtelement 390 und dem Kopf 320 angeordnetes Abdeckelement 300. Das Dichtelement 390 und das Abdeckelement 300 besitzen eine bevorzugt kreisförmige Innen- und Aussenkontur und umschliessen den Schaft 340 ringförmig.

Das Dichtelement 390 besteht aus einem ersten Material. Das erste Material umfasst bevorzugt ein Elastomer, besonders bevorzugt einen EPDM. Das Abdeckelement 300 besteht aus einem zweiten Material, welches sich von dem ersten Material unterscheidet. Vorzugsweise umfasst oder besteht das zweite Material aus einem Gleitmittel, wie beispielsweise einem Wachs oder einem Öl, welches unter Umständen Scherkräfte zwischen dem Abdeckelement 300 und dem Kopf 320 bei einem Festdrehen der Vorrichtung 310 verringert.

Das Widerlager 330 weist eine Anlagefläche 332 für eine Anlage an das Abdeckelement 300 sowie einen ersten Dichtvorsprung 334 und einen zweiten Dichtvorsprung 336 auf. Bevorzugt berühren die Dichtvorsprünge 334, 336 die zweite Dichtfläche 380 des Abdeckelementes 300. Die Dichtvorsprünge 334, 336 erstrecken sich bevorzugt in umlaufender Richtung um die Achse 350 und umschliessen die Achse 350 besonders bevorzugt als geschlossene Ringe, insbesondere in Form von Ringwülsten. Bei nicht dargestellten Ausführungsbeispielen sind ein oder mehrere Dichtvorsprünge dagegen nur stellenweise ausgebildet. Bei weiteren nicht dargestellten Ausführungsbeispielen weist das Dichtelement und damit das Abdeckelement alternativ oder zusätzlich zu dem oder den Dichtvorsprüngen des Widerlagers einen oder mehrere Dichtvorsprünge auf, welche in axialer Richtung an das Widerlager, insbesondere an dessen Dichtvorsprung oder Dichtvorsprünge heranreichen.

Das Dichtelement 390 weist die erste Dichtfläche 370 und das Abdeckelement 300 weist die zweite Dichtfläche 380 auf. Die erste Dichtfläche 370 und/oder die zweite Dichtfläche 380 ist quer, insbesondere senkrecht zu der Achse 350 ausgerichtet. Unter Umständen wird dann die erste Dichtfläche 370 und/oder die zweite Dichtfläche 380 im befestigten Zustand der Vorrichtung 310 mit einer Kraft in Richtung der Achse 350 beaufschlagt, so dass eine Aussparung, in der die Vorrichtung 310 befestigt ist, gegenüber einer äusseren Umgebung abgedichtet ist. Weiterhin weist das Dichtelement 390 eine dritte Dichtfläche 375 auf, welche längs, insbesondere parallel zu der Achse 350 ausgerichtet ist. Die dritte Dichtfläche 375 ist gegenüber dem Schaft 340 angeordnet und von dem Schaft 340 beabstandet. Bei nicht dargestellten Ausführungsbeispielen berührt die dritte Dichtfläche den Schaft im unbefestigten Zustand der Befestigungsvorrichtung.

Der Kopf 320 weist einen umlaufenden Vorsprung 325 auf, welcher einen kleineren Aussendurchmesser besitzt als das Dichtelement 390 und das Abdeckelement 300. Das Abdeckelement 300 besitzt einen gleich grossen Aussendurchmesser wie das Dichtelement 390. Bei nicht gezeigten Ausführungsbeispielen ist der Aussendurchmesser des Dichtelementes kleiner als der Aussendurchmesser des Abdeckelementes und/oder des Vorsprunges beziehungsweise des Kopfes.

Das Kraftübertragungsmittel 345 ist von dem Abdichtmittel 360 und insbesondere der ersten Dichtfläche 370 in axialer Richtung beabstandet, und zwar in der von dem Kopf 320 weg weisenden Richtung. Bei nicht dargestellten Ausführungsbeispielen reicht das Kraftübertragungsmittel in axialer Richtung bis an das Abdichtmittel beziehungsweise die erste Dichtfläche oder bis an den Kopf heran.

Die in der rechten Bildhälfte von Fig. 3 dargestellte Vorrichtung 310' weist einen Kopf 320' mit einem als Anlagefläche ausgebildeten Widerlager 330' für eine Abstützung des ersten Gegenstandes sowie einen länglichen Schaft 340' auf. Der Kopf 320' ist an einem ersten Ende des Schaftes 340' angeordnet, wobei der Schaft 340' an seinem zweiten Ende eine nicht dargestellte Spitze aufweist. Der Schaft definiert in seiner Längsrichtung eine Achse 350', zu der das Widerlager 330' vorzugsweise senkrecht orientiert ist. Weiterhin weist der Schaft 340' ein als ein Gewinde ausgebildetes Kraftübertragungsmittel 345' zum Übertragen einer Haltekraft von der Vorrichtung 310' auf den nicht gezeigten zweiten Gegenstand auf. Bevorzugt ist die Vorrichtung 310' als selbstpenetrierendes Drehbefestigungselement ausgebildet. Der Kopf 320' und/oder der Schaft 340' umfasst ein Metall, insbesondere Aluminium, oder eine Legierung, insbesondere Edelstahl oder Stahl, bevorzugt mit einer Antikorrosionsbeschichtung, welche insbesondere Zink enthält.

Die Vorrichtung 310' weist ein Abdichtmittel 360' mit einer ersten Dichtfläche 370' für eine Abdichtung gegen den ersten Gegenstand und einer zweiten Dichtfläche 380' für eine Abdichtung gegen das Widerlager 330' auf. Das Abdichtmittel 360' umfasst dabei ein Dichtelement 390' und ein in axialer Richtung zwischen dem Dichtelement 390' und dem Kopf 320' angeordnetes Abdeckelement 300'. Das Dichtelement 390' und das Abdeckelement 300' besitzen eine bevorzugt kreisförmige Innen- und Aussenkontur und umschliessen den Schaft 340' ringförmig. Das Abdeckelement 300' umfasst ein Metall, insbesondere Aluminium, oder eine Legierung, insbesondere Edelstahl oder Stahl, bevorzugt mit einer Antikorrosionsbeschichtung, welche insbesondere Zink enthält. Das Abdeckelement 300' besteht dabei bevorzugt aus dem gleichen Material wie der Kopf 320' und/oder der Schaft 340'.

Das Dichtelement 390' besteht aus einem ersten Material. Das erste Material umfasst bevorzugt ein Elastomer, besonders bevorzugt einen EPDM. Das Abdeckelement 300' besteht aus einem zweiten Material, welches sich von dem ersten Material unterscheidet. Vorzugsweise umfasst oder besteht das zweite Material aus einem Metall und/oder einer Legierung wie beispielsweise Edelstahl. Das Dichtelement 390' und das Abdeckelement 300' sind einander gegenüber angeordnet und berühren sich. Bevorzugt sind das Dichtelement 390' und das Abdeckelement 300' miteinander stoffschlüssig verbunden, insbesondere verklebt oder verschweisst. Bei nicht dargestellten Ausführungsbeispielen liegen das Dichtelement und das Abdeckelement nur lose aneinander an.

Das Widerlager 330' weist eine Anlagefläche 332' für eine Anlage an das Abdeckelement 300' sowie einen Dichtvorsprung 334' auf. Für eine Anlage an das Dichtelement 390' reicht der Dichtvorsprung 334' in axialer Richtung an das Dichtelement 390' heran, bezogen auf die Achse 350', und ist unmittelbar gegenüber der zweiten Dichtfläche 380' angeordnet. Bevorzugt berührt der Dichtvorsprung 334' die zweite Dichtfläche 380'. Der Dichtvorsprung 334' erstreckt sich bevorzugt in umlaufender Richtung um die Achse 350' und umschliesst die Achse 350' besonders bevorzugt als geschlossener Ring, insbesondere in Form einer Ringwulst. Bevorzugt ist ein Aussendurchmesser des Dichtvorsprungs 334' genauso gross wie ein Innendurchmesser des Abdeckelementes 300'. Unter Umständen dient der Dichtvorsprung 334' einer Führung, insbesondere Zentrierung des Abdeckelementes 300'. Bei nicht dargestellten Ausführungsbeispielen sind mehrere Dichtvorsprünge dagegen nur stellenweise ausgebildet. Bei weiteren nicht dargestellten Ausführungsbeispielen weist das Dichtelement alternativ oder zusätzlich zu dem Dichtvorsprung des Widerlagers einen oder mehrere Dichtvorsprünge auf, welche in axialer Richtung an das Widerlager, insbesondere an dessen Dichtvorsprung heranreichen.

Das Dichtelement 390' weist die erste Dichtfläche 370' und die zweite Dichtfläche 380' auf. Die erste Dichtfläche 370' und/oder die zweite Dichtfläche 380' ist quer, insbesondere senkrecht zu der Achse 350' ausgerichtet. Unter Umständen wird dann die erste Dichtfläche 370' und/oder die zweite Dichtfläche 380' im befestigten Zustand der Vorrichtung 310' mit einer Kraft in Richtung der Achse 350' beaufschlagt, so dass eine Aussparung, in der die Vorrichtung 310' befestigt ist, gegenüber einer äusseren Umgebung abgedichtet ist. Weiterhin weist das Dichtelement 390' eine dritte Dichtfläche 375' auf, welche längs, insbesondere parallel zu der Achse 350' ausgerichtet ist. Die dritte Dichtfläche 375' ist gegenüber dem Schaft 340' angeordnet und von dem Schaft 340' beabstandet. Bei nicht dargestellten Ausführungsbeispielen berührt die dritte Dichtfläche den Schaft im unbefestigten Zustand der Befestigungsvorrichtung.

Der Kopf 320' weist einen umlaufenden Vorsprung 325' auf, welcher einen kleineren Aussendurchmesser besitzt als das Dichtelement 390' und das Abdeckelement 300'. Das Abdeckelement 300' besitzt einen grösseren Aussendurchmesser als das Dichtelement 390'. Unter Umständen schützt das Abdeckelement 300' das Dichtelement 390' vor äusseren Einflüssen wie beispielsweise Licht- oder Witterungseinflüssen. Bei nicht gezeigten Ausführungsbeispielen ist der Aussendurchmesser des Dichtelementes gleich gross oder grösser als der Aussendurchmesser des Abdeckelementes und/oder des Vorsprunges beziehungsweise des Kopfes.

Das Kraftübertragungsmittel 345' ist von dem Abdichtmittel 360' und insbesondere der ersten Dichtfläche 370' in axialer Richtung beabstandet, und zwar in der von dem Kopf 320' weg weisenden Richtung. Bei nicht dargestellten Ausführungsbeispielen reicht das Kraftübertragungsmittel in axialer Richtung bis an das Abdichtmittel beziehungsweise die erste Dichtfläche oder bis an den Kopf heran.

In Fig. 4 sind die Vorrichtungen 310, 310' aus Fig. 3, nun an einem ersten Gegenstand 415 befestigt, in einer weiteren kombinierten Seiten- und Schnittansicht dargestellt. Die Dichtelemente 390, 390' sind zwischen den Widerlagern 330, 330' und dem ersten Gegenstand 415 eingeklemmt, insbesondere verpresst. Die Abdichtmittel 360, 360' dichten mit ihren axialen Dichtflächen 370, 370', 380, 380' eine Aussparung 418 in dem ersten Gegenstand 415 gegenüber einer äusseren Umgebung ab, so dass die Aussparung 418 vor Korrosion geschützt ist.

Die Dichtvorsprünge 334, 336, 334' bewirken eine erhöhte Verpressung der Dichtelemente 390, 390' und verringern unter Umständen eine Gefahr von Undichtigkeiten. Weiterhin werden die dritten Dichtflächen 375, 375' gegen die Schäfte 340, 340' gedrückt, so dass die Gefahr von Undichtigkeiten unter Umständen weiter verringert wird. Bei gegebenenfalls auftretenden Kräften zwischen den Widerlagern 330, 330' und den Dichtelementen 390, 390' quer zu den Achsen 350, 350' wird die Gefahr eines Verrutschens der Dichtelemente 390, 390' unter Umständen ebenfalls durch die Dichtvorsprünge 334, 336, 334' verringert.

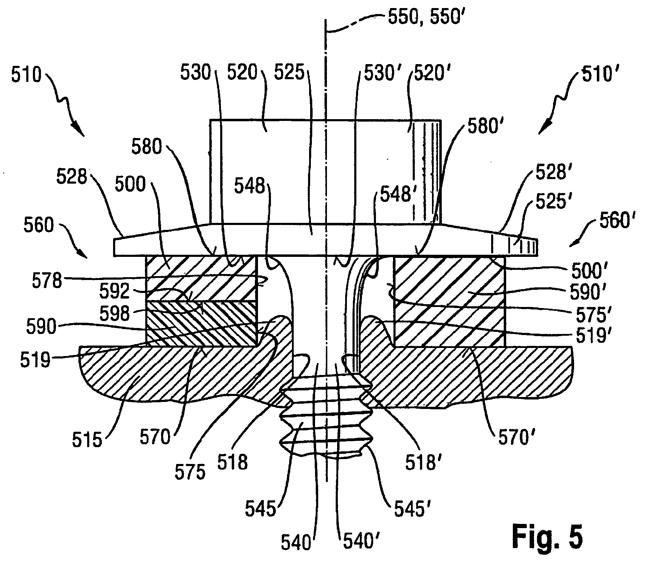

In Fig. 5 sind in der linken Bildhälfte eine Vorrichtung 510 sowie in der rechten Bildhälfte eine abgewandelte Vorrichtung 510' jeweils zur Befestigung eines ersten Gegenstandes 515 an einem nicht gezeigten zweiten Gegenstand in einer kombinierten Seiten- und Schnittansicht dargestellt.

Die in der linken Bildhälfte von Fig. 5 dargestellte Vorrichtung 510 weist einen Kopf 520 mit einem als Anlagefläche ausgebildeten Widerlager 530 für eine Abstützung des ersten Gegenstandes sowie einen länglichen Schaft 540 auf. Der Kopf 520 ist an einem ersten Ende des Schaftes 540 angeordnet, wobei der Schaft 540 an seinem zweiten Ende eine nicht dargestellte Spitze aufweist. Der Schaft definiert in seiner Längsrichtung eine Achse 550, zu der das Widerlager 530 vorzugsweise senkrecht orientiert ist. Weiterhin weist der Schaft 540 ein als ein Gewinde ausgebildetes Kraftübertragungsmittel 545 zum Übertragen einer Haltekraft von der Vorrichtung 510 auf den nicht gezeigten zweiten Gegenstand auf. Der Kopf 520 und/oder der Schaft 540 umfasst ein Metall, insbesondere Aluminium, oder eine Legierung, insbesondere Edelstahl oder Stahl, bevorzugt mit einer Antikorrosionsbeschichtung, welche insbesondere Zink enthält.

Die Vorrichtung 510 weist ein Abdichtmittel 560 mit einer ersten Dichtfläche 570 für eine Abdichtung gegen den ersten Gegenstand und einer zweiten Dichtfläche 580 für eine Abdichtung gegen das Widerlager 530 auf. Insbesondere für die Abdichtung gegen das Widerlager 530 ist die zweite Dichtfläche 580 unmittelbar gegenüber dem Widerlager 530 angeordnet und berührt das Widerlager 530. Das Abdichtmittel 560 umfasst dabei ein Dichtelement 590 und ein in axialer Richtung zwischen dem Dichtelement 590 und dem Kopf 520 angeordnetes Abdeckelement 500. Das Dichtelement 590 und das Abdeckelement 500 besitzen eine bevorzugt kreisförmige Innen- und Aussenkontur und umschliessen den Schaft 540 ringförmig. Eine Dicke des Dichtelementes 590 in axialer Richtung, bezogen auf die Achse 550, beträgt bevorzugt mindestens 3 mm.

Das Dichtelement 590 weist eine dritte Dichtfläche 592 für eine Abdichtung gegen das Abdeckelement 500 und das Abdeckelement 500 weist eine vierte Dichtfläche 598 für eine Abdichtung gegen das Dichtelement 590 auf. Die dritte Dichtfläche 592 und die vierte Dichtfläche 598 sind einander gegenüber angeordnet und berühren sich. Bevorzugt sind die dritte Dichtfläche 592 und die vierte Dichtfläche 598 miteinander stoffschlüssig verbunden, insbesondere verklebt oder verschweisst. Bei nicht dargestellten Ausführungsbeispielen liegen die dritte Dichtfläche und die vierte Dichtfläche nur lose aneinander an.

Weiterhin weist das Dichtelement 590 eine Innenfläche 575 auf, welche längs, insbesondere parallel zu der Achse 550 ausgerichtet ist. Ebenso weist das Abdeckelement 500 eine Innenfläche 578 auf, welche längs, insbesondere parallel zu der Achse 550 ausgerichtet ist. Die Innenflächen 575, 578 sind gegenüber dem Schaft 540 angeordnet und von dem Schaft 540 beabstandet. Gegebenenfalls dient ein Spalt zwischen der Innenfläche 575 und dem Schaft 540 und/oder zwischen der Innenfläche 578 und dem Schaft 540 der Aufnahme einer insbesondere um die Achse 550 umlaufenden Wulst 519 des ersten Gegenstandes 515, welche sich während eines Eintreibens der bevorzugt selbstpenetrierenden Vorrichtung 510 in eine Aussparung 518 des ersten Gegenstandes 515 unter Umständen bildet. Weiterhin erlaubt der Spalt zwischen der Innenfläche 578 und dem Schaft 540 und/oder zwischen der Innenfläche 575 und dem Schaft 540 das Vorsehen eines abgerundeten Übergangsbereichs 548 zwischen dem Schaft 540 und dem Kopf 520. Der Übergangsbereich 548 umfasst dabei bevorzugt zwei, drei oder mehr konische Abschnitte mit zum Kopf 520 hin grösser werdenden Neigungswinkeln gegenüber der Achse 550.

Bei nicht dargestellten Ausführungsbeispielen reicht das Dichtelement und/oder das Abdeckelement im befestigten und/oder bereits im unbefestigten Zustand der Vorrichtung bis an den Schaft heran. Unter Umständen wird das Volumen zwischen dem Übergangsbereich und der Wulst von dem Dichtelement und/oder dem Abdeckelement ausgefüllt, so dass gegebenenfalls eine zusätzliche Dichtwirkung vorhanden ist.

Das Dichtelement 590, welches insbesondere die erste Dichtfläche 570 umfasst, besteht aus einem ersten Material. Das Abdeckelement 500, welches insbesondere die zweite Dichtfläche 580 umfasst, besteht aus einem zweiten Material, welches sich von dem ersten Material unterscheidet. Das erste Material umfasst bevorzugt ein erstes Elastomer, besonders bevorzugt einen ersten EPDM, und/oder das zweite Material umfasst bevorzugt ein zweites Elastomer, besonders bevorzugt einen zweiten EPDM. Eine Shore-Härte des ersten Materials beträgt dabei höchstens 70°Shore, bevorzugt höchstens 60°Shore, besonders bevorzugt höchstens 50°Shore. Eine Shore-Härte des zweiten Materials beträgt dabei mindestens 70°Shore, bevorzugt mindestens 80°Shore, besonders bevorzugt mindestens 90°Shore.

Der Kopf 520 weist einen tellerförmig umlaufenden Vorsprung 525 auf, welcher einen grösseren Aussendurchmesser besitzt als jeweils das Dichtelement 590 und das Abdeckelement 500. Bevorzugt beträgt der Aussendurchmesser des Vorsprungs 525 zwischen 9 mm und 20 mm. Das Dichtelement 590 besitzt einen gleich grossen Aussendurchmesser wie das Abdeckelement 500. Weiterhin besitzt das Dichtelement 590 einen gleich grossen Innendurchmesser wie das Abdeckelement 500. Der Vorsprung 525 weist auf seiner von dem Schaft 540 abgewandten Seite eine Fase 528 auf.

Das Kraftübertragungsmittel 545 ist von dem Abdichtmittel 560 und insbesondere der ersten Dichtfläche 570 in axialer Richtung beabstandet, und zwar in der von dem Kopf 520 weg weisenden Richtung. Ein axialer Abstand des Kraftübertragungsmittels 545 von dem Kopf 520 beziehungsweise von dem Vorsprung 525 beträgt bevorzugt zwischen 2 mm und 15 mm, besonders bevorzugt zwischen 3 mm und 10 mm. Das Gewinde des Kraftübertragungsmittels 545 endet dabei abrupt in dem jeweiligen Abstand zu dem Kopf. Bei nicht dargestellten Ausführungsbeispielen endet das Kraftübertragungsmittel dagegen fliessend, insbesondere nimmt eine Gewindehöhe über mehrere Millimeter, in axialer Richtung gesehen, ab.

Die in der rechten Bildhälfte von Fig. 5 dargestellte Vorrichtung 510' weist einen Kopf 520' mit einem als Anlagefläche ausgebildeten Widerlager 530' für eine Abstützung des ersten Gegenstandes sowie einen länglichen Schaft 540' auf. Der Kopf 520' ist an einem ersten Ende des Schaftes 540' angeordnet, wobei der Schaft 540' an seinem zweiten Ende eine nicht dargestellte Spitze aufweist. Der Schaft definiert in seiner Längsrichtung eine Achse 550', zu der das Widerlager 530' vorzugsweise senkrecht orientiert ist. Weiterhin weist der Schaft 540' ein als ein Gewinde ausgebildetes Kraftübertragungsmittel 545' zum Übertragen einer Haltekraft von der Vorrichtung 510' auf den nicht gezeigten zweiten Gegenstand auf.

Die Vorrichtung 510' weist ein Abdichtmittel 560' mit einer ersten Dichtfläche 570' für eine Abdichtung gegen den ersten Gegenstand und einer zweiten Dichtfläche 580' für eine Abdichtung gegen das Widerlager 530' auf. Insbesondere für die Abdichtung gegen das Widerlager 530' ist die zweite Dichtfläche 580' unmittelbar gegenüber dem Widerlager 530' angeordnet und berührt das Widerlager 530'. Das Abdichtmittel 560' umfasst dabei ein Dichtelement 590' und ein in axialer Richtung zwischen dem Dichtelement 590' und dem Kopf 520' angeordnetes Abdeckelement 500'. Das Dichtelement 590' und das Abdeckelement 500' besitzen eine bevorzugt kreisförmige Innen- und Aussenkontur und umschliessen den Schaft 540' ringförmig. Eine Dicke des Dichtelementes 590' in axialer Richtung, bezogen auf die Achse 550', beträgt bevorzugt mindestens 3 mm.

Weiterhin weist das Dichtelement 590' eine Innenfläche 575' auf, welche längs, insbesondere parallel zu der Achse 550' ausgerichtet ist. Die Innenfläche 575' ist gegenüber dem Schaft 540' angeordnet und von dem Schaft 540' beabstandet. Gegebenenfalls dient ein Spalt zwischen der Innenfläche 575' und dem Schaft 540' der Aufnahme einer insbesondere um die Achse 550' umlaufenden Wulst 519' des ersten Gegenstandes 515, welche sich während eines Eintreibens der bevorzugt selbstpenetrierenden Vorrichtung 510' in eine Aussparung 518' des ersten Gegenstandes 515' unter Umständen bildet. Weiterhin erlaubt der Spalt zwischen der Innenfläche 575' und dem Schaft 540' das Vorsehen eines abgerundeten Übergangsbereichs 548' zwischen dem Schaft 540' und dem Kopf 520'. Der Übergangsbereich 548' umfasst dabei bevorzugt zwei, drei oder mehr konische Abschnitte mit zum Kopf 520' hin grösser werdenden Neigungswinkeln gegenüber der Achse 550'.

Das Dichtelement 590', welches insbesondere die erste Dichtfläche 570' umfasst, besteht aus einem ersten Material. Das erste Material umfasst bevorzugt ein Elastomer, besonders bevorzugt einen EPDM, bevorzugt mit einer Shore-Härte von höchstens 70°Shore. Das Abdeckelement 500', welches insbesondere die zweite Dichtfläche 580' umfasst, besteht aus einem zweiten Material, welches sich von dem ersten Material unterscheidet. Vorzugsweise umfasst oder besteht das zweite Material aus einem Gleitmittel, wie beispielsweise einem Wachs oder einem Öl. Unter Umständen verringert das Abdeckelement gegebenenfalls auftretende Scherkräfte zwischen dem Abdeckelement 500' und dem Kopf 520' bei einem Festdrehen der Vorrichtung 510'.

Der Kopf 520' weist einen insbesondere tellerförmig umlaufenden Vorsprung 525' auf, welcher einen grösseren Aussendurchmesser besitzt als jeweils das Dichtelement 590' und das Abdeckelement 500'. Unter Umständen werden das Dichtelement 590' und das Abdeckelement 500' vor äusseren Witterungseinflüssen wie beispielsweise Sonnenstrahlung geschützt. Bevorzugt beträgt der Aussendurchmesser des Vorsprungs 525' zwischen 9 mm und 20 mm, besonders bevorzugt zwischen 12 mm und 18 mm. Der Vorsprung 525' weist auf seiner von dem Schaft 540' abgewandten Seite eine Fase 528' auf. Weiterhin weist der Kopf 520' insbesondere auf seiner von dem Schaft 540' abgewandten Seite einen Drehantrieb auf, bevorzugt einen Innensechskant, einen Aussensechskant, einen Flachschlitz, einen Kreuzschlitz oder dergleichen.

Das Kraftübertragungsmittel 545' ist von dem Abdichtmittel 560' und insbesondere der ersten Dichtfläche 570' in axialer Richtung beabstandet, und zwar in der von dem Kopf 520' weg weisenden Richtung. Ein axialer Abstand des Kraftübertragungsmittels 545' von dem Kopf 520' beziehungsweise von dem Vorsprung 525' beträgt bevorzugt zwischen 3 mm und 15 mm. Das Gewinde des Kraftübertragungsmittels 545' endet dabei abrupt in dem jeweiligen Abstand zu dem Kopf. Bei nicht dargestellten Ausführungsbeispielen endet das Kraftübertragungsmittel dagegen fliessend, insbesondere nimmt eine Gewindehöhe über mehrere Millimeter, in axialer Richtung gesehen, ab.

Die Erfindung wurde anhand von Beispielen einer Vorrichtung zur insbesondere abgedichteten Befestigung eines ersten Gegenstandes an einem zweiten Gegenstand beschrieben. Bei dem ersten Gegenstand handelt es sich dabei bevorzugt um einen plattenförmigen Gegenstand wie beispielsweise ein Metallblech. Bei dem zweiten Gegenstand handelt es sich dabei bevorzugt ebenfalls um einen plattenförmigen Gegenstand wie beispielsweise ein Metallblech oder aber um einen massiven Gegenstand mit einer Dicke, welche über die Länge des Schaftes der Vorrichtung hinausgeht.

Es wird darauf hingewiesen, dass die erfindungsgemässe Vorrichtung auch für andere Zwecke geeignet ist.

## Patentansprüche

1. Vorrichtung (10,210,310,510) zur Befestigung eines ersten Gegenstandes (215,415,515) an einem zweiten Gegenstand, mit einem Kopf (20,220,320,520), wobei der Kopf ein Widerlager (30,230,330,530) für eine Abstützung des ersten Gegenstandes aufweist einem länglichen Schaft (40,240,340,540), wobei der Schaft in seiner Längsrichtung eine Achse (50,250,350,550) definiert, und einem Abdichtmittel (60,260,360,560), wobei das Abdichtmittel eine erste Dichtfläche (70,270,370,570) für eine Abdichtung gegen den ersten Gegenstand und eine zweite Dichtfläche (80,280,380,580) für eine Abdichtung gegen das Widerlager aufweist, wobei das Abdichtmittel ein Dichtelement (90,290,390,590) und ein in axialer Richtung zwischen dem Dichtelement und dem Kopf angeordnetes Abdeckelement (100,200,300,500) aufweist, wobei das Dichtelement ein erstes Material umfasst und das Abdeckelement ein sich von dem ersten Material unterscheidendes zweites Material umfasst.

2. Vorrichtung nach Anspruch 1, wobei die zweite Dichtfläche unmittelbar gegenüber dem Widerlager angeordnet ist und insbesondere das Widerlager berührt.

3. Vorrichtung nach einem der vorhergehenden Ansprüche, wobei die erste und/oder die zweite Dichtfläche ein Elastomer umfasst, insbesondere aus einem Elastomer besteht.

4. Vorrichtung nach einem der vorhergehenden Ansprüche, wobei das Abdichtmittel, das Dichtelement und/oder das Abdeckelement den Schaft ringförmig umschliesst, insbesondere mit einer im Wesentlichen kreisförmigen Innen- und/oder Aussenkontur.

5. Vorrichtung nach einem der vorhergehenden Ansprüche, wobei das Abdeckelement einen grösseren Innendurchmesser und/oder Aussendurchmesser als das Dichtelement aufweist.

6. Vorrichtung nach einem der vorhergehenden Ansprüche, wobei das Dichtelement die erste und die zweite Dichtfläche aufweist.

7. Vorrichtung nach einem der vorhergehenden Ansprüche, wobei das Widerlager eine Anlagefläche für das Abdeckelement und einen insbesondere um die Achse umlaufenden Dichtvorsprung (334) aufweist, wobei der Vorsprung in axialer Richtung an das Dichtelement heranreicht.

8. Vorrichtung nach einem der vorhergehenden Ansprüche, wobei das Dichtelement eine Anlagefläche für das Abdeckelement und einen insbesondere um die Achse umlaufenden Dichtvorsprung aufweist, wobei Vorsprung in axialer Richtung an das Widerlager heranreicht.

9. Vorrichtung nach einem der vorhergehenden Ansprüche, wobei das Abdeckelement ein Metall und/oder eine Legierung umfasst, insbesondere aus einem Metall und/oder einer Legierung besteht.

10. Vorrichtung nach einem der vorhergehenden Ansprüche, wobei der Kopf einen gleich grossen oder grösseren Aussendurchmesser als das Abdeckelement und/oder das Dichtelement aufweist.

11. Vorrichtung nach einem der vorhergehenden Ansprüche, wobei das Dichtelement die erste Dichtfläche aufweist und das Abdeckelement die zweite Dichtfläche aufweist, wobei das Dichtelement insbesondere eine dritte Dichtfläche (92,292,592) für eine Abdichtung gegen das Abdeckelement aufweist und/oder das Abdeckelement eine vierte Dichtfläche (98,298,598) für eine Abdichtung gegen das Dichtelement aufweist.

12. Vorrichtung nach einem der vorhergehenden Ansprüche, wobei das Abdeckelement ein Elastomer umfasst, insbesondere aus einem Elastomer besteht, wobei das Elastomer insbesondere eine grössere Shore-Härte als ein Material des Dichtelementes aufweist.

13. Vorrichtung nach einem der vorhergehenden Ansprüche, wobei das Abdeckelement ein Gleitmittel umfasst, insbesondere aus einem Gleitmittel besteht.

14. Vorrichtung nach einem der vorhergehenden Ansprüche, wobei der Schaft Kraftübertragungsmittel (45,245,345,545) für ein Halten des zweiten Gegenstandes aufweist.

15. Vorrichtung nach einem der vorhergehenden Ansprüche, wobei der Schaft ein erstes und ein zweites Ende aufweist, und wobei der Kopf an dem ersten Ende angeordnet ist und/oder das zweite Ende eine Spitze aufweist.

## Claims

1. Device (10, 210, 310, 510) for fastening a first object (215, 415, 515) to a second object, having a head (20, 220, 320, 520), the head possessing an abutment (30, 230, 330, 530) for supporting the first object, having an elongated shank (40, 240, 340, 540), the shank defining an axis (50, 250, 350, 550) in its longitudinal direction, and having a sealing means (60, 260, 360, 560), the sealing means having a first sealing face (70, 270, 370, 570) for sealing against the first object and a second sealing face (80, 280, 380, 580) for sealing against the abutment, the sealing means having a sealing member (90, 290, 390, 590) and a covering member (100, 200, 300, 500), which latter is arranged between the sealing member and the head in the axial direction, wherein the sealing member comprises a first material and the covering member comprises a second material different from the first material.

2. Device according to claim 1, wherein the second sealing face is arranged directly opposite the abutment and in particular is touching the abutment.

3. Device according to either of the preceding claims, wherein the first and/or the second sealing face comprises an elastomer and in particular consists of an elastomer.

4. Device according to one of the preceding claims, wherein the sealing means, the sealing member and/or the covering member surround(s) the shank annularly, in particular by a substantially circular inner and/or outer circumference.

5. Device according to one of the preceding claims, wherein the covering member is of a larger inside diameter and/or outside diameter than the sealing member.

6. Device according to one of the preceding claims, wherein the sealing member has the first and the second sealing faces.

7. Device according to one of the preceding claims, wherein the abutment has a contact-making face for the covering member and has a sealing projection (334) which in particular extends in a loop round the axis, the projection reaching as far as the sealing member in the axial direction.

8. Device according to one of the preceding claims, wherein the sealing member has a contact-making face for the covering member and has a sealing projection which in particular extends in a loop round the axis, the projection reaching as far as the abutment in the axial direction.

9. Device according to one of the preceding claims, wherein the covering member comprises a metal and/or an alloy and in particular consists of a metal and/or an alloy.

10. Device according to one of the preceding claims, wherein the head is of as large a diameter as, or of a larger diameter than, the covering member and/or the sealing member.

11. Device according to one of the preceding claims, wherein the sealing member has the first sealing face and the covering member has the second sealing face, the sealing member having in particular a third sealing face (92, 292, 592) for sealing against the covering member and/or the covering member having a fourth sealing face (98, 298, 598) for sealing against the sealing member.

12. Device according to one of the preceding claims, wherein the covering member comprises an elastomer, and in particular consists of an elastomer, the elastomer being in particular of a higher Shore hardness than a material of the sealing member.

13. Device according to one of the preceding claims, wherein the covering member comprises a lubricant and in particular consists of a lubricant.

14. Device according to one of the preceding claims, wherein the shank has force-transmitting means (45, 245, 345, 545) for retaining the second object.

15. Device according to one of the preceding claims, wherein the shank has a first and a second end, and wherein the head is arranged at the first end and/or the second end has a point.

## Revendications

1. Dispositif (10, 210, 310, 510) pour fixer un premier objet (215, 415, 515) à un second objet, comportant une tête (20, 220, 320, 520), la tête comportant un premier contre-palier (30, 230, 330, 530) pour supporter le premier objet, un arbre allongé (40, 240, 340, 540), l'arbre définissant un axe (50, 250, 350, 550) dans sa direction longitudinale, et des moyens d'étanchéité (60, 260, 360, 560), les moyens d'étanchéité comportant une première surface d'étanchéité (70, 270, 370, 570) pour créer une étanchéité contre le premier objet et une deuxième surface d'étanchéité (80, 280, 380, 580) pour créer une étanchéité contre le contre-palier, les moyens d'étanchéité comportant un élément d'étanchéité (90, 290, 390, 590) et un élément de recouvrement (100, 200, 300, 500) agencé, dans une direction axiale, entre l'élément d'étanchéité et la tête, l'élément d'étanchéité incluant un premier matériau et l'élément de recouvrement incluant un second matériau différent du premier matériau.

2. Dispositif selon la revendication 1, dans lequel la deuxième surface d'étanchéité est agencée directement par rapport au contre-palier et est en particulier en contact avec le contre-palier.

3. Dispositif selon l'une des revendications précédentes, dans lequel la première et/ou la deuxième surface d'étanchéité inclut un élastomère, en particulier est en un élastomère.

4. Dispositif selon l'une des revendications précédentes, dans lequel les moyens d'étanchéité, l'élément d'étanchéité et/ou l'élément de recouvrement entourent l'arbre de manière annulaire, en particulier avec un contour intérieur et/ou extérieur de forme sensiblement circulaire.

5. Dispositif selon l'une des revendications précédentes, dans lequel l'élément de recouvrement a un diamètre intérieur et/ou un diamètre extérieur plus grand que l'élément d'étanchéité.

6. Dispositif selon l'une des revendications précédentes, dans lequel l'élément d'étanchéité comporte les première et deuxième surfaces d'étanchéité.

7. Dispositif selon l'une des revendications précédentes, dans lequel le contre-palier comporte une surface de contact pour l'élément de recouvrement et une saillie d'étanchéité (334), en particulier entourant l'axe, dans lequel la saillie s'étend dans une direction axiale jusqu'à l'élément d'étanchéité.

8. Dispositif selon l'une des revendications précédentes, dans lequel l'élément d'étanchéité comporte une surface de contact pour l'élément de recouvrement et une saillie d'étanchéité, en particulier entourant l'axe, dans lequel la saillie s'étend dans une direction axiale jusqu'au contre-palier.

9. Dispositif selon l'une des revendications précédentes, dans lequel l'élément de recouvrement inclut un métal et/ou un alliage, en particulier est constitué en un métal et/ou en un alliage.

10. Dispositif selon l'une des revendications précédentes, dans lequel la tête a un diamètre extérieur de même grandeur ou plus grand que l'élément de recouvrement et/ou que l'élément d'étanchéité.

11. Dispositif selon l'une des revendications précédentes, dans lequel l'élément d'étanchéité comporte la première surface d'étanchéité et l'élément de recouvrement comporte la deuxième surface d'étanchéité, dans lequel l'élément d'étanchéité comporte en particulier une troisième surface d'étanchéité (92, 292, 592) pour créer une étanchéité contre l'élément de recouvrement et/ou l'élément de recouvrement comporte une quatrième surface d'étanchéité (98, 298, 598) pour créer une étanchéité contre l'élément d'étanchéité.

12. Dispositif selon l'une des revendications précédentes, dans lequel l'élément de recouvrement inclut un élastomère, en particulier est constitué en un élastomère, dans lequel l'élastomère a en particulier une dureté Shore supérieure à celle d'un matériau de l'élément d'étanchéité.

13. Dispositif selon l'une des revendications précédentes, dans lequel l'élément de recouvrement inclut des moyens de glissement, en particulier est constitué de moyens de glissement.

14. Dispositif selon l'une des revendications précédentes, dans lequel l'arbre comporte des moyens de transmission de force (45, 245, 345, 545) pour le maintien du second objet.

15. Dispositif selon l'une des revendications précédentes, dans lequel l'arbre comporte une première extrémité et une seconde extrémité, et dans lequel la tête est agencée sur la première extrémité et/ou la seconde extrémité comporte une pointe.
